# EUROPEAN PATENT SPECIFICATION

(11) **EP 3 220 045 B1**
(45) Date of publication and mention of the grant of the patent: **05.12.2018**
(21) Application number: 17158341.2
(22) Date of filing: 28.02.2017
(51) Int. Cl.: F23D 14/36, F23D 14/02

(54) **MULTIFUNCTIONAL SLEEVE FOR A PREMIX HEAT EXCHANGE CELL, MULTIFUNCTIONAL SLEEVE AND MULTIFUNCTIONAL SLEEVE SUPPORT ASSEMBLY, AND PREMIX HEAT EXCHANGE CELL**
MULTIFUNKTIONELLE BUCHSE FÜR EINE VORMISCH-WÄRMETAUSCHERZELLE, ANORDNUNG AUS MULTIFUNKTIONELLER BUCHSE UND AUFNAHME FÜR DIE MULTIFUNKTIONELLE BUCHSE, UND EINE VORMISCH-WÄRMETAUSCHERZELLE
DOUILLE MULTIFONCTIONNELLE POUR CELLULE D'ECHANGEUR THERMIQUE PRÉMIX, ASSEMBLAGE D'UN DOUILLE MULTIFONCTIONNELLE ET UN SUPPORT POUR DOUILLE MULTIFONCTIONNELLE, ET CELLULE D'ECHANGEUR THERMIQUE PRÉMIX

(30) Priority: 15.03.2016 IT UA20161680
(43) Date of publication of application: 20.09.2017
(73) Proprietor: Condevo S.p.A., 20123 Milano (IT)
(72) Inventor: CASTELLI, Remo, I-20123 MILANO (IT); GIANNONI, Rocco, I-20123 MILANO (IT)
(74) Representative: Leihkauf, Steffen Falk

(56) References cited:
- DE-A1-102006 057 086
- US-A- 2 839 128
- US-A- 4 701 123

## Description

### Field of the invention

The present invention relates to the technical field of premix boilers, i.e. boilers adapted to supply a flow of a liquid, e.g. water, heated by means of the combustion of a gaseous mixture of fuel/combustion air. More specifically, the present invention relates to a premix heat exchange cell with a multifunctional sleeve operatively interposed between a premixer adapted to supply the gaseous mixture and a mixture feeding duct towards a combustion space adjacent to a heat exchanger crossed by the liquid to be heated.

### Background art

A known type of boiler comprises a premix heat exchange cell, in particular a condensing cell, comprising an outer casing containing a liquid/gas heat exchanger adapted to receive heat from the combustion inside the casing.

The cell is a so-called premix cell because an inner combustion space is reached by a fuel mixture formed externally by means of a premixer.

The casing is closed by a door which can be opened.

The mixture is carried into the casing by means of a feeding duct which connects the premixer to the inside of the casing.

The premixer has a gas inlet and an air inlet and a gas/air mixture outlet, and comprises electrical connections for supplying an internal motor with fan and a control unit.

According to the known art, the premixer is directly connected to the feeding duct without interposed elements, and is carried suspended from the feeding duct. Therefore, the premixer is not connected in any manner to the casing.

In order to access the inside of the casing, there is a need to: remove the screws connecting the door to the casing, remove the fluidic connection of a gas tube connected to the gas inlet of the premixer, remove the electrical connection of the premixer, grasp the door-feeding duct-premixer unit and remove it.

Then, the aforesaid group requires grasping again, positioning it at the assembly position thereof at the casing, tightening the screws to fasten the door to the casing, restoring the connection of the gas tube to the gas inlet of the premixer, restoring the electrical connection to the premixer.

The aforesaid group to be removed is cumbersome and heavy, and therefore is inconvenient to be handled.

Moreover, the connection/disconnection of the gas tube and the connection/disconnection of the electrical wires are delicate operations which are to be performed by authorized labor.

Another known method for maintaining a heat exchange cell is that of separating the premixer from the mixture feeding duct, while leaving it connected to the gas tube and to the electrical connections.

Also in this case, although it is not required to disconnect the gas and air fluidic connections and the electrical connections of the premixer, the premixer disadvantageously remains coupled to and hanging from the gas tube connected to the premixer and to the electrical connections, also connected to the premixer, thus applying its own weight thereto and resulting in an increased risk to the detriment of operating safety.

In addition to ordinary cleaning operations, there may be the need to replace components contained inside the casing. The door needs to be removed from the casing also in this case.

The aforesaid known art therefore results in several disadvantages, among which increased labor and difficulty in handling the door-duct-premixer unit due to the weight and volume thereof, and the need for specific skills for disconnecting/connecting the gas, air and electrical connections.

Not only is this disadvantage reflected in the maintenance operations, but also during the assembly steps during production.

Indeed, during assembly, the operator manually moves the whole door-duct-premixer unit, which is heavy and cumbersome, thus affecting daily production due to required breaks.

These disadvantages result in increased maintenance or production costs.

Another disadvantage of the known art occurs when the heat exchange cells of a plurality of premix cells are connected in parallel, or cascade-connected, to one another. Parallel or cascade connection means that the fumes outlets of each cell are connected to a single flue.

In this case, a reflux of fumes may occur through certain connected heat exchange cells, up to leaking into the environment in which the boiler is located, with unquestionably serious safety problems and the risk of intoxication.

Indeed, if the pressure from the outside of the cell through the fumes outlet is greater than the inner pressure, the fumes are pushed back through the mixture feeding duct, passing through the premixer, and they could leak through the premixer air inlet.

Similarly, there could be gas leaks.

Sometimes current legislation imposes the use of non-return systems to prevent the reflux of fumes or gases.

Sometimes the non-return systems comprise a swing check valve arranged in a seat in the connection flange to the premixer of the mixture feeding duct.

This means that according to the known art, the shape of the check valve is closely associated with the shape of the seat in the flange of the premixer.

This results in a rigid selection of components which are to have a shape dedicated to a specific premixer.

US 2 839 128 A discloses a burner for receiving a combustible mixture of fuel and air moving at high velocity and burning the mixture at a maximum rate of heat release and in a minimum space.

DE 10 2006 057086 A1 discloses a fan for a gas burner system having a spiral-shaped housing including a rotational axis and an air outlet that widens towards an outflow side of the fan. An impeller is placed concentric to the rotational axis at an inside of the fan housing. An electric motor is integrated at a center of the impeller for driving the impeller. An aperture of the air outlet lies on a plane that extends in a radial manner to the housing. A labyrinth seal is provided in a region of an outside circumference between the impeller and the housing, which is made of plastics.

### Summary of the invention

It is an object of the present invention to devise and provide a premix heat exchange cell with a multifunctional sleeve which allows to meet the aforesaid needs while at least partially obviating the drawbacks indicated above with reference to the known art.

In particular, it is an object of the present invention to facilitate the maintenance of a premix heat exchange cell, while reducing the times required for the maintenance and ensuring increased operating safety.

In particular, it is a task of the present invention to provide a multifunctional sleeve which allows to remove the door without removing the premixer, thus leaving it tightly connected to the casing, or to remove the premixer without removing the door, thus leaving it tightly connected to the casing, or to remove the door and the premixer together.

It is another object of the present invention to allow the separation of the multifunctional sleeve from the casing in a quick and easy manner, for example while preventing the use of clamping tools.

It is another object of the present invention to provide a universal multifunctional sleeve capable of allowing the assembly of different premixers.

It is another object of the present invention to provide a universal multifunctional sleeve capable of accommodating a check valve independently of the features of the premixer used.

It is a further object of the present invention to provide an interchangeable multifunctional sleeve according to the features of the premixer used.

It is a further object of the present invention to provide a multifunctional sleeve which allows quick access to the check valve without removing the premixer, thus leaving it rigidly fastened to the casing.

It is a further object of the present invention to provide a premix heat exchange cell which is easy, quick and affordable to be maintained.

These and further objects and advantages are achieved by means of a premix heat exchange cell according to independent claim 1.

Further objects, solutions and advantages are in the embodiments hereinafter described and claimed in the dependent claims.

### Brief description of the drawings

The invention is disclosed below with the description of certain embodiments thereof, made by way of a non-limiting example, with reference to the accompanying drawings in which:
- figure 1 shows a side view of a heat exchange cell according to the invention, having a multifunctional sleeve according to the invention, in which the door is fastened to the casing;
- figure 2 shows a side view of the cell in figure 1, in which the door is removed without removing the premixer;
- figure 3 shows a side view of the cell in figure 1, in which the premixer is removed without removing the door;
- figure 4 shows a multifunctional sleeve and multifunctional sleeve support assembly in which the multifunctional sleeve is close to the support;
- figure 5 shows a bottom view of the cell in figure 1, in which the multifunctional sleeve is in a coupled position to the casing and in which the premixer has not yet been assembled;
- figure 6 shows the bottom view in figure 5, in which the multifunctional sleeve is in an uncoupled position from the casing;
- figure 7 shows the bottom view in figure 5, in which the sleeve is removed and separated from the casing;
- figure 8 shows the multifunctional sleeve according to the invention in a position moved away from the casing before being anchored to the casing;
- figure 9 shows the multifunctional sleeve in an insertion position in which it approaches the support in direction orthogonal to the sliding surface of the sleeve;
- figure 10 shows the multifunctional sleeve in a position in which the sliding surface of the sleeve is in contact with the sliding counter-surface of the support;
- figure 11 shows the multifunctional sleeve after the sliding thereof along the sliding direction, in coupled position to the support and therefore to the casing;
- figure 12 shows a bottom view of a multifunctional sleeve of the heat exchange cell according to the invention;
- figure 13 shows a side view of the sleeve in figure 12;
- figure 14 shows a top view of the sleeve in figure 12;
- figure 15 shows a sectional view of the sleeve in figure 12, by means of a plane XV indicated in figure 14;
- figure 16 shows a sectional view of the sleeve in figure 12, by means of a plane XVI indicated in figure 14;
- figure 17 shows an isometric view from the bottom, of the sleeve in figure 12;
- figure 18 shows an isometric view of a swing check valve adapted to be accommodated in a seat in the first flange of the sleeve in figure 19;
- figure 19 shows an isometric view from the top, of the sleeve in figure 12;
- figure 20 shows a top view of the swing check valve in figure 18;
- figure 21 shows a sectional view of the check valve in figure 20, by means of a plane XXI indicated in figure 20;
- figure 22 shows a sectional view of the sleeve in figure 12, also comprising the swing check valve inserted in the specific seat of the sleeve, in which the sectional view is obtained with the sectional plane XVI indicated in figure 14;
- figure 23 shows an embodiment of the sleeve and of the assembly according to the invention, in which the sliding direction is orthogonal to the extraction direction of the door.

### Description of the preferred embodiments

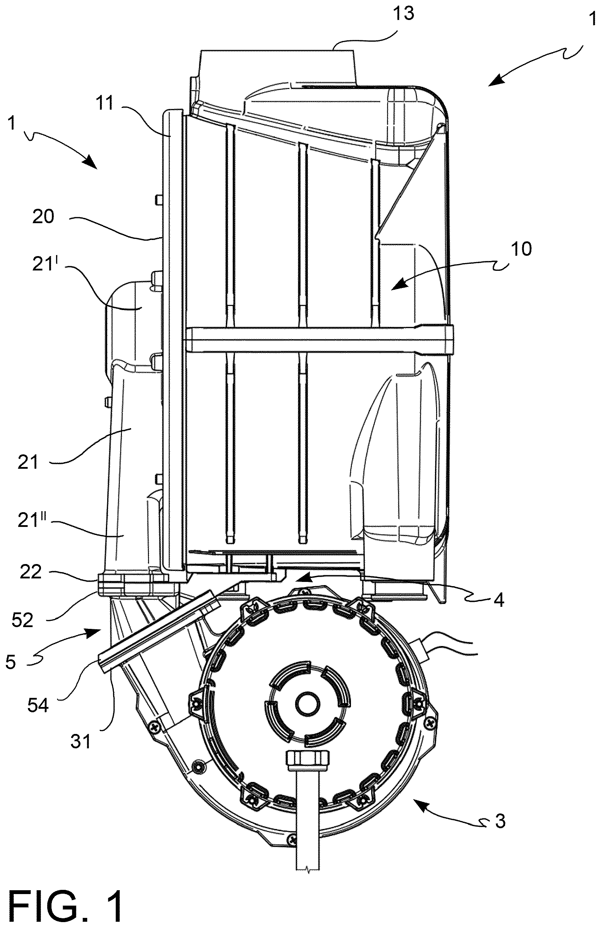

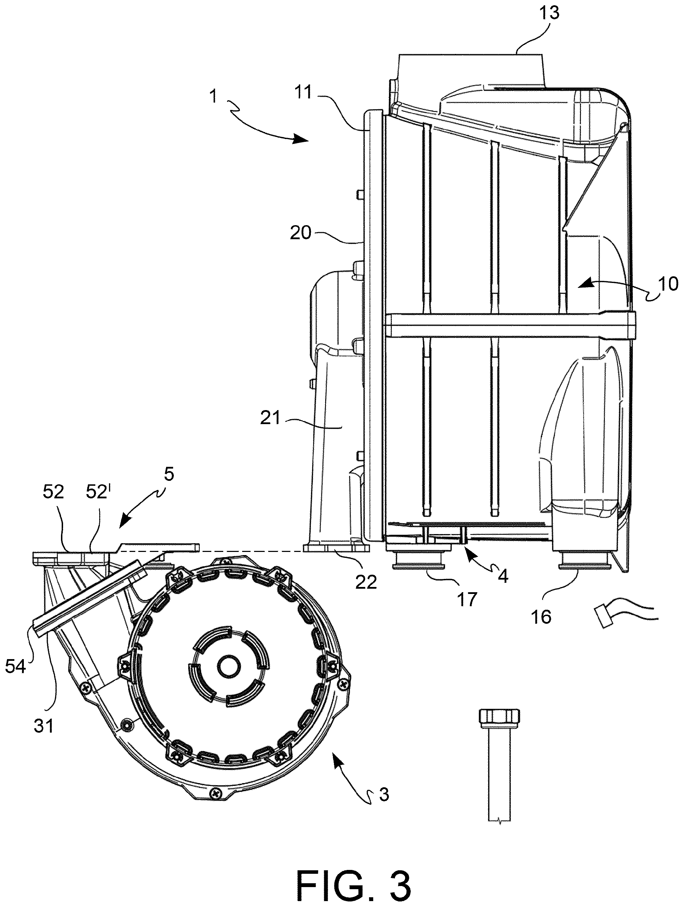

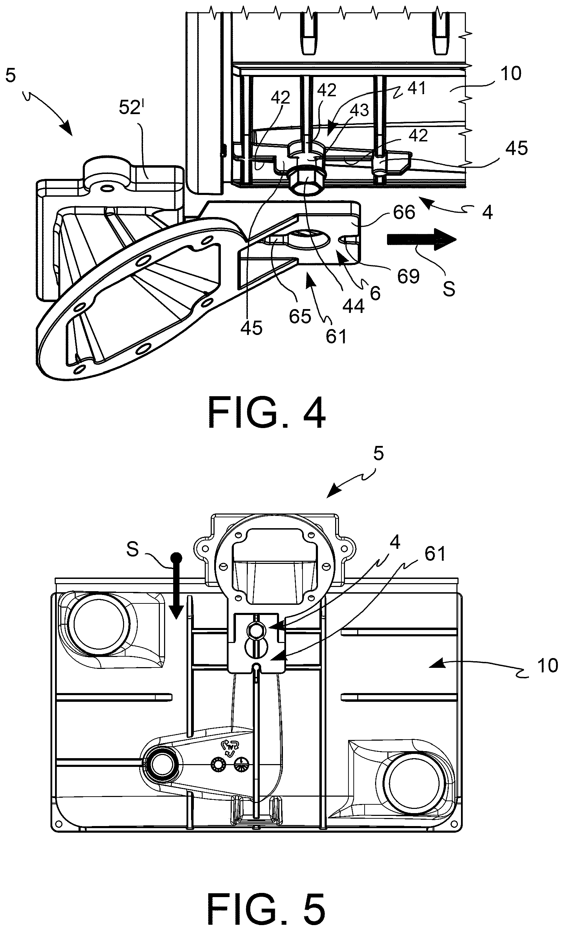

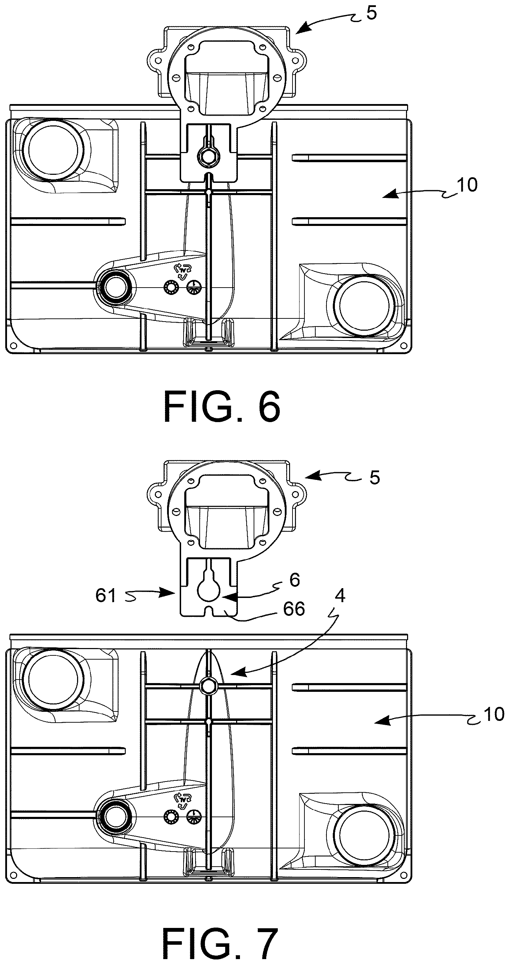

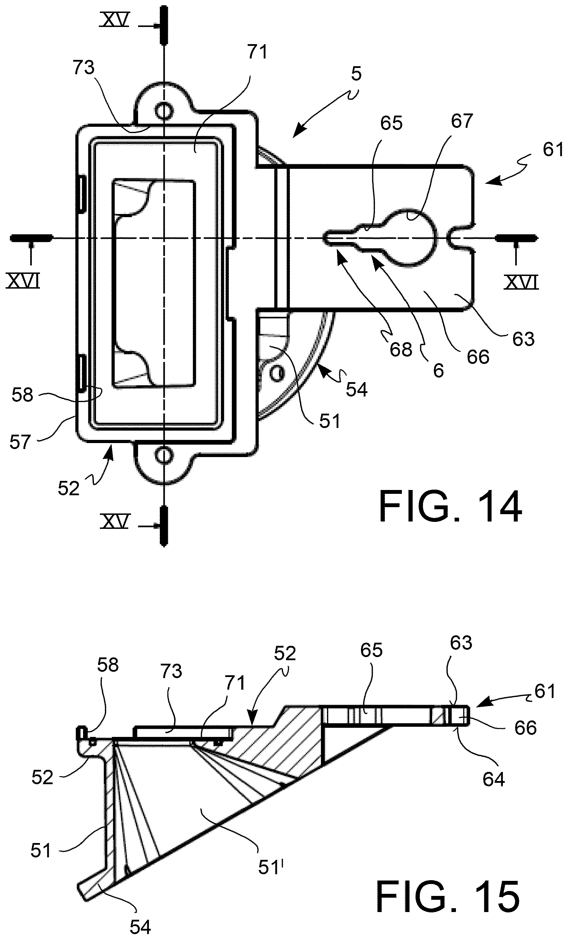

With reference to figures 1 to 26, a multifunctional sleeve for a premix heat exchange cell according to the invention, is indicated as a whole with numeral 5.

With reference to figures 1 to 3 and 5 to 7, a heat exchange cell according to the invention comprising the multifunctional sleeve 5, is indicated as a whole with numeral 1.

The heat exchange cell 1 comprises a casing 10.

The casing 10 contains a liquid/gas heat exchanger 14 and a combustion space 15 adjacent to the exchanger 14.

For example, the exchanger 14 is of the spiral type, for example having circular or helical spirals, and forms a free space in the middle portion thereof adapted to form the combustion space 15.

Such an exchanger comprises a tube wound according to a plurality of spirals. The tube is adapted to be flowed by a liquid to be heated, e.g. water.

The combustion which occurs in the combustion space 15 laps exchanger 14, thus transferring an amount of heat to the liquid flowing in the exchanger.

Since a condensate forms on the outer surface of the exchanger, and therefore on the outer surface of the tube, the casing is configured to collect such a condensate and to convey it towards a discharge.

For this reason, such a heat exchange cell is called condensing heat exchanger.

Casing 10 has such a shape as to contain the exchanger 14, therefore according to one shape, it is substantially cylindrical.

According to an embodiment, the cylindrical casing 10 has an open flat base of cylindrical casing to allow the combustion space to be accessed.

A closing plate 11 with a central opening 12 adapted to be closed by means of a removable door 20, may be arranged at the open base.

According to an embodiment, the door 20 has a diameter such asto close the open base of the cylindrical casing 10. In such a case, there is no closing plate 11.

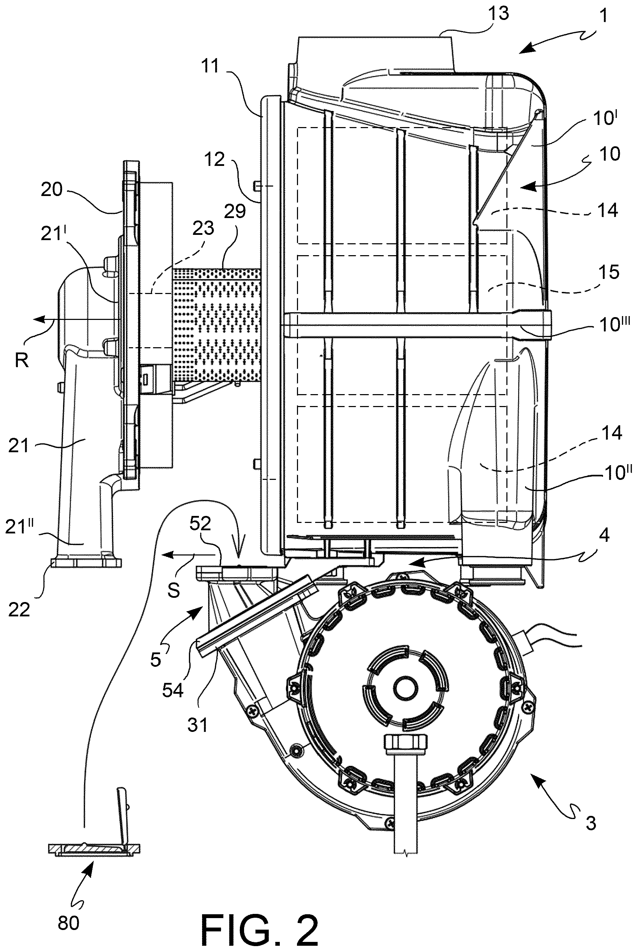

With reference to figure 2, the casing 10 may be formed by two half-casings which can be assembled to each other along a joining line 10"', e.g. a top half-casing 10' and a bottom half-casing 10".

According to an embodiment, the joining line 10"' is given by the intersection between the cylindrical casing 10 and a plane passing through the axis of cylindrical casing 10.

The cell thus comprises a door 20, which is adapted to be removably fastened to casing 10 to close it, in use, and is adapted to be removed from casing 10 to allow access inside casing 10 during maintenance operations.

The door 20 comprises a mixture feeding duct 21 having a first duct end 21' attached to the door 20 and ending up, in use, inside casing 10 at the combustion space 15 through a through opening 23 in the door 20.

The first duct end 21' attached to the door 20 means that the first duct end 21' is connected, or rigidly connected, to the through opening of door 23. In other words, the mixture feeding duct 21 may be formed in one piece with door 20, or alternatively may be mounted on door 20.

With reference to figure 2, there may be a burner 29 associated with the door 2 at the first duct end 21', preferably adapted to be arranged in the combustion space 15.

Moreover, the mixture feeding duct 21 has a free second duct end 21' adapted to receive an incoming fuel gas/combustion air mixture supplied by a premixer 3 having a premixer 31 outlet.

According to an embodiment, as shown for example in figures from 1 to 3, the second duct end 21" ends with a duct flange 22.

The premixer 3 comprises an inlet for the fuel gas, an inlet for combustion air, and an outlet for fuel gas/combustion air mixture.

Moreover, the premixer comprises a fan carried in rotation by an electric motor, and an electronic control for adjusting the rotation speed of the fan and/or for adjusting the open section of the combustion air inlet.

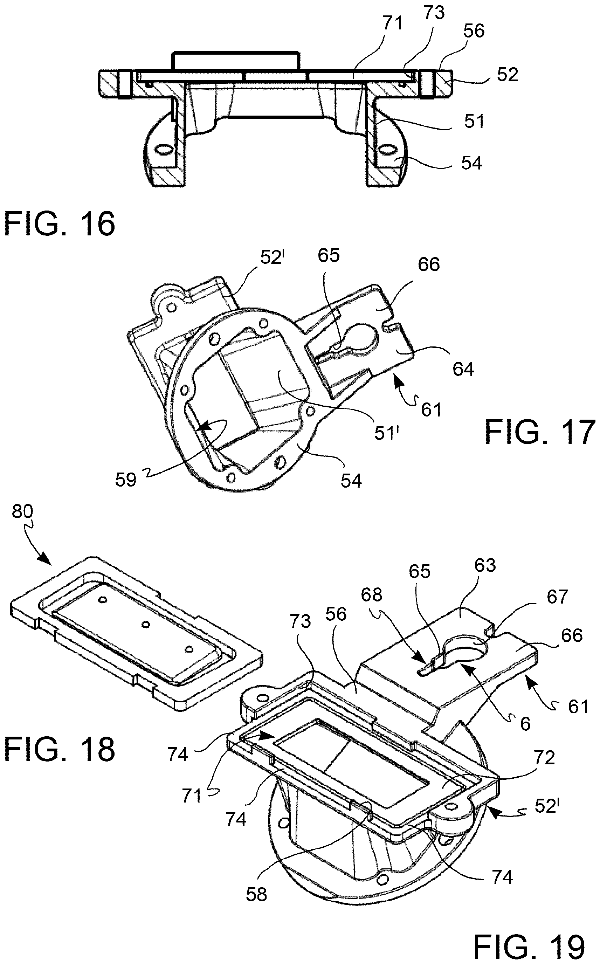

The multifunctional sleeve 5 (shown in detail in figures 16 to 21, 23, 26) comprises a tubular portion 51, a first fluidic connection portion 52 at a first end 53 of the tubular portion 51, and a second fluidic connection portion 54 at a second end 55 of the tubular portion opposite to the first end.

Axial direction with respect to the tubular element means a main extension direction of the tubular portion between the first and the second tubular portion ends 53 and 55. This means that the first tubular portion end 53 and the second tubular portion end 55 comprise an inlet or outlet opening, respectively.

Radial direction with respect to the tubular portion means a direction substantially orthogonal to the axial direction.

The second fluid connection portion 54 is adapted to be removably fastened to a premixer outlet 31.

Moreover, the first fluid connection portion 42 is adapted to be removably fastened to the second duct end 21".

The multifunctional sleeve further comprises a fastening device 61 adapted to removably fasten the multifunctional sleeve 5 from casing 10, outside the casing 10, preferably so that the multifunctional sleeve 5 remains operatively carried by, or suspended from, the casing 10 by means of the fastening device 61. In other words, the fastening device 61 is configured to directly fasten the multifunctional sleeve 5 to the casing 10, while avoiding, for example, fastening the multifunctional sleeve 5 to the casing 10 by means of a premixer 3.

According to an embodiment, the fastening device 61 comprises sliding engagement means 6 adapted to fasten the multifunctional sleeve 5 to the casing 10 by means of at least one sliding movement between the multifunctional sleeve 5 and the casing 10 along a predefined sliding direction S between an insertion position and a locking position.

According to an embodiment, the sliding engagement means 6 comprise a connection portion 66 defined by a sliding surface 63, an opposite retaining surface 64, a sliding slit 65 passing through the connection portion 66 between the sliding surface 63 and the retaining surface 64 and along the sliding direction S.

According to an embodiment, the connection portion 66 comprises a plate portion.

According to an embodiment, a first face of the plate portion comprises the sliding surface 63, an opposite second face of the plate portion comprises the retaining surface 64, and in which the plate portion is crossed through by the sliding slit 65.

The connection portion 66 is adapted to be slidably engaged with a multifunctional sleeve support 4 comprising a coupling portion 41 adapted to be removably coupled to the connection portion 66 for removably retaining the multifunctional sleeve 4.

For example, the coupling portion 41 can be slidably engaged with the fastening device 61 between an insertion position and a locking position along the predefined sliding direction S.

According to an embodiment, the support 4 comprises a sliding counter-surface 42 along which the sliding surface 63 may slide, a pin portion 43 projecting from the sliding counter-surface 42 adapted to be slidably engaged in the sliding slit 65.

According to an embodiment, said pin portion 43 comprises a widened end head 44 adapted to be engaged by an undercut against the retaining surface 64.

According to an embodiment, the sliding slit 65 has opposite ends closed, preferably at the insertion position and the locking position, of which the insertion end comprises a slit widened portion 67.

The slit widened portion 67 has a larger diameter than the widened end head 44 of the pin portion 43 so as to approach the connection portion 66 to support 4 and to bring the sliding surface 63 in abutment against the sliding counter-surface 42 by passing the slit widened portion 67 about the widened end head 44.

The support 4 is adapted to be fastened externally to said casing 10 or is made in one piece with the casing 10, for example with the bottom half-casing 10".

According to an embodiment, the fastening device 61 comprises reference means 68 for guiding the multifunctional sleeve 5 along the sliding direction S and preventing further movements of the multifunctional sleeve 5 when it is in the locking position.

For example, the reference means are provided in the connection portion 66.

According to an embodiment, the reference means 68 comprise at least one reference slit 69, which extends in the connection portion 66, along or parallel to the sliding direction S.

According to an embodiment, support 4 comprises at least one reference projection 45 adapted to be inserted, in use, in the corresponding at least one reference slit 69 when the sleeve is fastened to support 4, therefore to the casing 10.

According to an embodiment, the at least one reference slit 69 and the at least one reference projection 45 are arranged along, or parallel, to the predefined sliding direction S.

According to an embodiment, the at least one reference slit 69 is aligned with the sliding slit 65.

According to an embodiment, the at least one reference projection is aligned with the pin portion 43, for example is arranged as an extension of the pin portion 43 in the sliding direction S.

According to an embodiment, the connection portion 66 projects away from the tubular portion along a radial direction with respect to the tubular portion 51.

The term radially means a direction substantially orthogonal to an extension axis of tubular portion.

According to an embodiment, the first fluidic connection portion 52 comprises a first flange 52' defining a first flange end surface 56.

Preferably, the first flange end surface 56 is an at least partially flat surface.

According to an embodiment, the first flange end surface 56 is substantially parallel to the sliding surface 63.

Alternatively, the first flange end surface 56 is inclined with respect to the sliding surface 63, preferably towards the second fluidic connection portion 54, preferably moving away from the feeding duct 21, preferably moving away from door 20.

According to an embodiment, the first flange end surface 56 is inclined with respect to the sliding direction S.

According to an embodiment, the first flange end surface 56 is interposed between the sliding surface 63 and the second tubular portion end 53, along an axial direction with respect to the tubular portion 51.

According to an embodiment, the first fluidic connection portion 52 comprises a valve seat 71 for receiving a check valve 80 therein.

Preferably, the check valve 80 is arranged to avoid a flow from the first tubular portion end 53 towards the second tubular portion end 53, and to allow a flow from the second tubular portion end 55 towards the first tubular portion end 53.

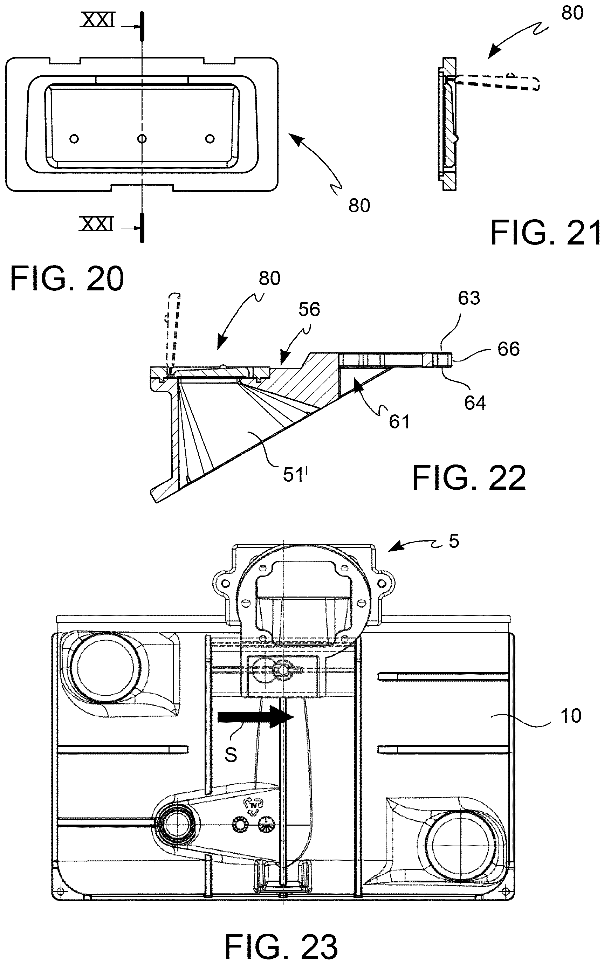

Preferably, the check valve 80 is a swing check valve, called clapet valve. An example of such a valve is shown in detail in figures 22, 24 to 26. The clapet valve in figures 25 and 26 is depicted in closed position with solid line, and in open position with dotted line.

According to an embodiment, the swing check valve is substantially rectangular.

According to an embodiment, the valve seat 71 comprises a recess which extends into the first flange 52' from the first flange end surface 56, preferably in axial direction with respect to the tubular portion 51.

According to an embodiment, the valve seat 71 has a substantially rectangular valve seat edge and/or wherein the first flange 52' has a substantially rectangular first flange edge.

According to an embodiment, the valve seat 71 has a valve seat bottom 72, e.g. substantially flat, preferably parallel to the first flange end surface 56.

According to an embodiment, the valve seat is delimited by the valve seat side surfaces 73 extending between the valve seat bottom 72 and the first flange end surface 56.

According to an embodiment, the valve seat side surfaces 73 comprise at least one opening window 74, preferably placed in portions of the valve seat side surfaces opposite to the connection portion 66. Such opening windows 74 allow the presence of the check valve and the status of the check valve to be viewed from the outside.

Moreover, the opening windows 74 allow to insert a tipped tool between the valve seat bottom 72 and the check valve 80 to remove a check valve 80.

According to an embodiment, the first flange 52' has a substantially straight end side of first flange 57 opposite to the connection portion 66, which is preferably orthogonal to the sliding direction S, for example such an end side of first flange 57 is substantially orthogonal to the first flange end surface 56.

Thereby, the overall volume of the cell is reduced in a direction parallel to the extraction direction of the door. This effect is particularly desired to reduce the overall volume of the boiler.

According to an embodiment, the valve seat edge has a substantially straight end side of valve seat edge 58 opposite to the connection portion 66, which is orthogonal to the sliding direction S.

According to an embodiment, the multifunctional sleeve 5 is delimited, on the side opposite to the connection portion 66, by a plane P-P orthogonal to the sliding direction S.

Thereby, the overall volume of the cell is reduced in a direction parallel to an opening direction of the door. Usually, the volume in this direction affects the encumbrance of the boiler when it is fastened to a wall.

According to an embodiment, the second fluidic connection portion 54 comprises a second flange 54', said second flange 54' having a second flange inner cross-section 59.

According to an embodiment, the second flange inner cross-section 59 is formed by two rectangles 59', 59" rotated to each other, preferably rotated about a center point of said rectangles.

According to an embodiment, the two rectangles 59' and 59" are substantially equal to each other.

According to an embodiment, the two rectangles 59' and 59" are rotated to each other by 90°. Thereby, the maximum passage cross-section is obtained.

According to an embodiment, the second flange 54' is inclined with respect to the first flange 52'.

According to an embodiment, the first flange 52' is substantially parallel to the second flange 54'.

According to an embodiment, the second flange 54' is inclined with respect to the plate portion of the connection portion 66, preferably moving away from the feeding duct 21.

According to an embodiment, the first flange 52' is inclined with respect to the plate portion of the connection portion 66, preferably approaching the second flange 54', or parallel to the second flange 54', preferably away from the feeding duct 21, preferably away from door 20. Thereby, the removal of door 20 away from the casing 10 is simplified, thus avoiding the occurrence of sliding friction between the second duct end 21" and the first tubular portion end 53. Indeed, as soon as the door 20 is moved away from the casing 10, the second duct end 21" moves away from the first tubular portion end 53.

According to an embodiment, the first flange 52' is inclined with respect to the sliding direction S.

The duct flange 22 is configured to couple with the first sleeve flange 52', in other words the duct flange 22 is parallel to the first sleeve flange 52'.

According to an embodiment, the second flange 54' is inclined with respect to the plate portion of the connection portion 66, preferably away from the first flange 52', or parallel to the first flange 52', preferably away from the feeding duct 21, preferably away from door 20.

According to an embodiment, the tubular portion 51 has a tubular portion inner cross-section 51' gradually varying from a first geometric shape at the first fluidic connection portion 52, to a second geometric shape at the second fluidic connection portion 54, which is different from the first geometric shape.

According to an embodiment, the first geometric shape is substantially rectangular.

According to an embodiment, the second geometric shape is formed by two rectangles 59', 59" rotated to each other.

According to an embodiment, the first fluidic connection portion 52 comprises a quick connection device (not shown in the drawings).

For example, the quick connection device comprises a tubular end adapted to couple in a corresponding tubular end of the second duct end 21" in a fluidic sealing manner.

For example, the tubular end of the first fluidic connection portion 52 is adapted to sealingly receive the tubular end of the second duct end 21", or vice versa. The fluidic seal may be obtained for example, by means of a gasket, e.g. an O-ring.

According to an embodiment, the second fluidic connection portion 54 comprises a quick connection device (not shown in the drawings).

For example, the quick connection device comprises a tubular end adapted to couple in a fluidic sealing manner in a corresponding tubular end of premixer 3.

For example, the tubular end of the second fluidic connection portion 54 is adapted to sealingly receive the tubular end of premixer 3, or vice versa.

The fluidic seal may be obtained for example, by means of a gasket, e.g. an O-ring.

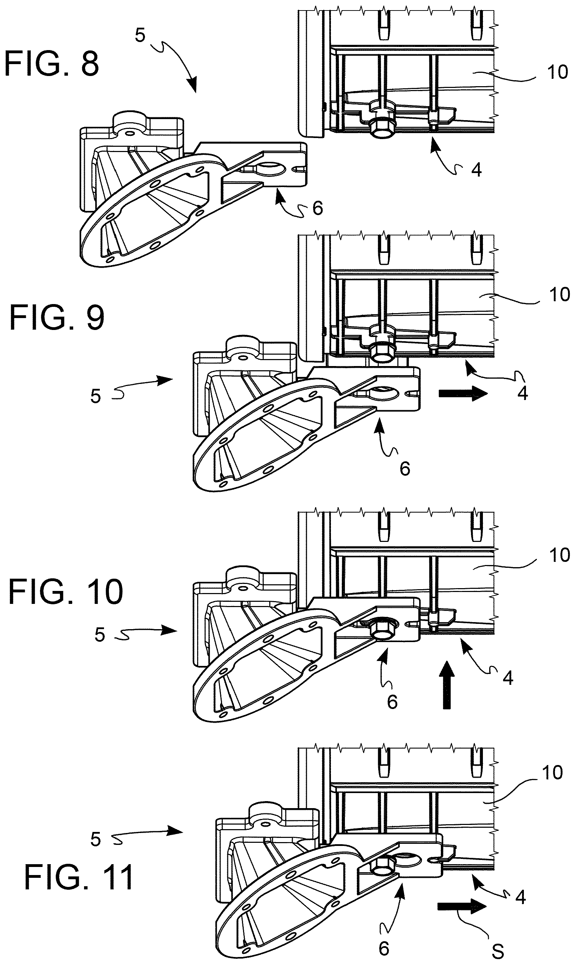

With regards to a possible example of removable fastening steps of the multifunctional sleeve 5 to the casing 10, figures 8 to 11 show a sequence of possible movements.

In particular, in figure 8, the multifunctional sleeve is in a position moved away from the casing before being anchored to the casing.

In figure 9, the multifunctional sleeve is in an insertion position in which it approaches the support, for example in a direction orthogonal to the sliding surface of the sleeve. In this position, the slit widened portion 67 is positioned at the widened head 44 of the pin portion 43.

In the subsequent figure 10, the sleeve approaches the casing up to bringing the sliding surface 63 in abutment against the sliding counter-surface 42 by means of an approaching movement.

This position corresponds to the insertion position described above.

Figure 11 shows the multifunctional sleeve 5 at the end of the sliding movement along the predefined sliding direction S. This position corresponds to the locking position described above. In this position, the at least one reference projection 45 is also inserted in the at least one corresponding reference slit 69, thus avoiding any movement differing from that along the sliding direction S for disassembling the sleeve from casing 10.

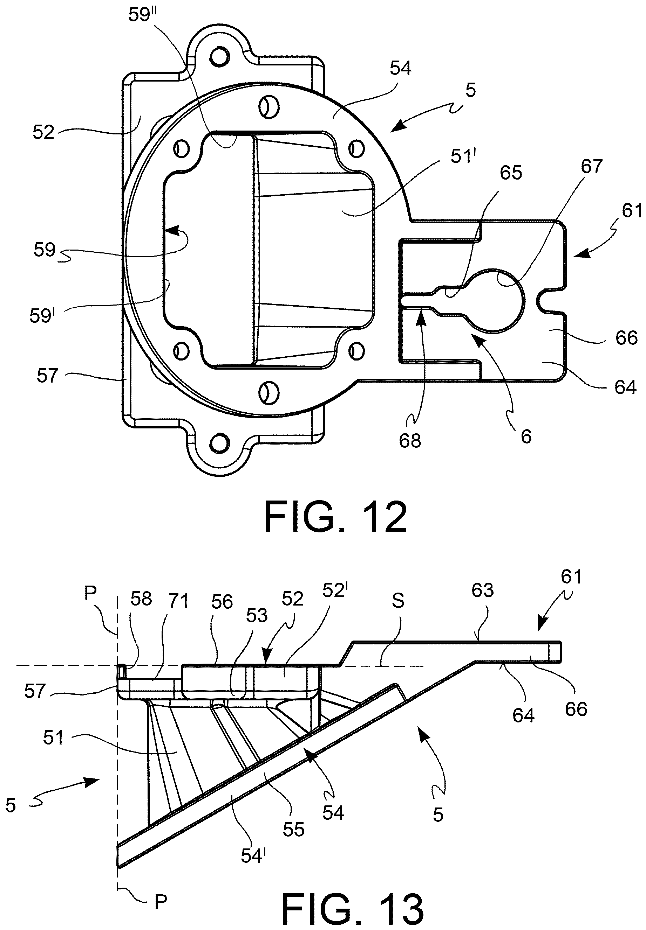

Figures 12 to 15 show the same steps according to a different angle.

According to another aspect of the invention, the aforesaid and other objects and advantages are met by a multifunctional sleeve 5 and multifunctional sleeve support 4 assembly, as described above.

According to an embodiment, the assembly does not have a locking device. In this case, the disassembly operation of the sleeve from the casing is simplified. It is obtained by simply dragging the sleeve, with respect to the casing, along the sliding direction.

According to another embodiment, the assembly comprises locking means adapted to lock the sleeve, with respect to the casing, in the locking position.

The sleeve support 4 comprises a support coupling portion 41 which can be removably coupled to the fastening device 61 for removably retaining the multifunctional sleeve 5, said sleeve support 4 being adapted to be mounted integrally with the casing 10, outside the casing 10.

This allows to apply the multifunctional sleeve to an already existing cell by simply fastening the sleeve support 4 to casing 10, for example to the bottom half-casing 10".

According to an embodiment, the sliding engagement means 6 can be slidably engaged with the support coupling portion 41, along the sliding direction S by means of at least one sliding movement between the multifunctional sleeve 5 and the sleeve support 4, along a predefined sliding direction S between an insertion position and a locking position.

According to an embodiment, the support coupling portion 41 comprises a sliding counter-surface 42 along which the sliding surface 63 may slide, a pin portion 43 projecting from the sliding counter-surface 42 adapted to be slidably engaged in the sliding slit 65, said pin portion 43 comprising a widened end head 44 adapted to be engaged by an undercut against the retaining surface 64.

According to another aspect of the invention again, the aforesaid objects and advantages are met by a premix heat exchange cell 1.

Such a cell 1 comprises the casing 10, as described above, adapted to contain a liquid/gas heat exchanger 14 and a combustion space 15 adjacent to exchanger 14.

According to an embodiment, the casing 10 contains a liquid/gas heat exchanger 14 and the combustion space 15 adjacent to exchanger 14.

Cell 1 further comprises the door 20, as described above, adapted to be removably fastened to casing 10 to close the casing, in use, and adapted to be removed from casing 10 to allow access inside casing 10 for maintenance operations.

The door 20 comprises a mixture feeding duct 21, as described above, having a first duct end 21' fastened to the door 20 and ending up, in use, inside the casing 10 at the combustion space 15 through a through opening 23 in the door 20, and a free second duct end 21" adapted to receive an incoming fuel gas/combustion air mixture from a premixer 3.

Cell 1 further comprises a multifunctional sleeve 5 and multifunctional sleeve support 4 assembly, as described above.

The door 20 can be removed from the casing 10 along a predefined door removal direction R.

For example, the predefined door removal direction R may be parallel to or coincident with the axis of the cylindrical casing.

According to an embodiment, the first flange end surface 56 is substantially parallel, in use, to the predefined door removal direction R.

According to an embodiment, the predefined sliding direction S of the sleeve is substantially parallel to the predefined door removal direction R.

According to an embodiment, the sliding direction S is transverse, or oblique, to the door removal direction R, for example thus avoiding the sliding direction S from being parallel to the door removal direction R.

Thereby, this prevents the multifunctional sleeve 5 from being accidentally dragged together with the mixture feeding duct 21 in case of adhesion with each other, while the door 20 is removed from the casing along the removal direction R.

According to an embodiment, for example shown in figure 23, the sliding direction S is orthogonal to the predefined door removal direction R.

Although the fastening device of the sleeve was described above in an embodiment comprising a connection portion 66 having a sliding surface 62, a retaining surface 64 parallel and opposite to the sliding surface 62, a sliding slit 65 passing through the connection portion 66 and extending between the sliding surface 62 and the retaining surface 64, and although the support 4 was described above as comprising a support coupling portion 41 comprising a sliding counter-surface 42 along which the sliding surface 62 may slide, a pin portion 43 projecting from the sliding counter-surface 42 adapted to be slidably engaged in the sliding slit 65, said pin portion 43 comprising a widened end head 44 adapted to be engaged by an undercut against the retaining surface 64;
the aforesaid features may be inverted, i.e. the multifunctional sleeve 5 may comprise the coupling portion 41 and the support may comprise the connection portion 66.

Those skilled in the art may make several changes and adaptations to the above-described embodiments of the device, and replace elements with others which are functionally equivalent in order to meet contingent needs, without departing from the scope of the following claims. Each of the features described as belonging to a possible embodiment may be achieved irrespective of the other embodiments described.

Various means and materials may be used to provide the different functions described without departing from the scope of the invention.

Moreover, the drawings are not necessarily to scale.

All the features herein described may be combined according to any combination, except the combinations in which at least some of such features mutually exclude each other.

## Claims

1. A premix heat exchange cell (1) comprising:
- a casing (10) adapted to contain a liquid/gas heat exchanger (14) and a combustion space (15) adjacent to the exchanger (14);
- a door (20) configured for being removably fastened to the casing (10) for closing the casing, in use, and adapted to be removed from the casing (10) to allow access inside the casing (10) for maintenance operations;
- said door (20) comprising a mixture feeding duct (21) having a first duct end (21') connected to a door through opening (23) of the door (20) and ending up inside the casing (10) at the combustion space (15), said mixture feeding duct (21) having a free second duct end (21") adapted to receive an incoming fuel gas/combustion air mixture from a premixer (3);
- a multifunctional sleeve (5)
- wherein said multifunctional sleeve (5) comprises:
- a tubular portion (51);
- a first fluidic connection portion (52) at a first tubular portion end (53) of the tubular portion (51), configured for being removably fastened to the second duct end (21");
- a second fluidic connection portion (54) at a second tubular portion end (55) of the tubular portion (51), opposite to the first end (53), suitable for being removably fastened to the premixer (3);
- a fastening device (61) configured for removably fastening the multifunctional sleeve (5) to the casing (10), outside the casing (10).

2. The cell according to claim 1, wherein the fastening device (61) comprises sliding engagement means (6) adapted to fasten the multifunctional sleeve (5) to the casing (10) by means of at least one sliding movement between the multifunctional sleeve (5) and the casing (10) along a predefined sliding direction (S) between an insertion position and a locking position.

3. The cell according to claim 2, wherein the sliding engagement means (6) comprise a connection portion (66) defined by a sliding surface (63), an opposite retaining surface (64), a sliding slit (65) passing through the connection portion (66) between the sliding surface (63) and the retaining surface (64) and extending along the sliding direction (S).

4. The cell according to at least one preceding claim, wherein the fastening device (61) comprises reference means (68) for guiding the sleeve (5) along the sliding direction (S) and preventing further movements of the sleeve (5) when it is in the locking position.

5. The cell according to at least one preceding claim, wherein the first fluidic connection portion (52) comprises a first flange (52') defining a first flange end surface (56), said first flange end surface (56) being an at least partially flat surface.

6. The cell according to claim 5, wherein the first flange end surface (56) is substantially parallel to the sliding surface (63).

7. The cell according to claim 5, wherein the first flange end surface (56) is inclined with respect to the sliding surface (63).

8. The cell according to at least one preceding claim, wherein the first fluid connection portion (52) comprises a valve seat (71) for receiving a check valve (80) therein.

9. The cell according to at least one preceding claim, wherein the second fluidic connection portion (54) comprises a second flange (54'), said second flange (54') having a second flange inner cross-section (54') formed by two rectangles (59', 59") rotated to each other.

10. The cell according to at least one preceding claim, wherein the tubular portion (51) has a tubular portion inner cross-section (51') gradually varying from a first geometric shape at the first fluidic connection portion (52) to a second geometric shape at the second fluidic connection portion (54), which is different from the first geometric shape.

11. The cell (1) according to at least one preceding claim, wherein the door (20) can be removed from the casing (10) along a predefined removal direction (R), and wherein the first flange end surface (56) is substantially parallel, in use, to the predefined door removal direction (R).

12. The cell (1) according to at least one preceding claim, wherein the door (20) can be removed from the casing (10) along a predefined removal direction (R) and wherein the predefined sliding direction (S) of the sleeve is substantially parallel, in use, to the predefined removal direction (R).

13. The cell (1) according to at least one of the preceding claims, wherein fastening device (61) is configured to directly fasten the multifunctional sleeve (5) to the casing (10).

14. The cell (1) according to at least one of the preceding claims, wherein the fastening device (61) is configured so that the multifunctional sleeve (5) is supported by, or suspended from, the casing by means of said fastening device (61).

## Patentansprüche

1. Vormischwärmetauscherzelle (1), welche aufweist:
- ein Gehäuse (10), das dazu ausgelegt ist, einen Flüssig/Gaswärmetauscher (14) und einen dem Tauscher (14) benachbarten Brennraum (15) aufzunehmen;
- eine Tür (20), die konfiguriert ist, um an dem Gehäuse (10) entfernbar befestigt zu werden, um im Gebrauch das Gehäuse zu verschließen, und dazu ausgelegt ist, von dem Gehäuse (10) entfernt zu werden, um Zugang zur Innenseite des Gehäuses (10) für Wartungsvorgänge zu erlauben;
- wobei die Tür (20) eine Gemischförderleitung (21) aufweist, die ein erstes Leitungsende (21') aufweist, das mit einer Türdurchgangsöffnung (23) der Tür (20) verbunden ist und oben innerhalb des Gehäuses (10) an dem Brennraum (15) endet, wobei die Gemischförderleitung (21) ein freies zweites Leitungsende (21") aufweist, das dazu ausgelegt ist, ein von einem Vormischer (3) hereinkommendes Brenngas/Verbrennungsluftgemisch aufzunehmen;
- eine multifunktionale Buchse (5),
- wobei die multifunktionale Buchse (5) aufweist:
- einen rohrförmigen Abschnitt (51);
- einen ersten Fluidverbindungsabschnitt (52) an einem ersten rohrförmigen Abschnittsende (53) des rohrförmigen Abschnitts (51), der konfiguriert ist, um an dem zweiten Leitungsende (21") entfernbar befestigt zu werden;
- einen zweiten Fluidverbindungsabschnitt (54) an einem zweiten rohrförmigen Abschnittsende (55) des rohrförmigen Abschnitts (51) entgegengesetzt dem ersten Ende (53), der dazu geeignet ist, an dem Vormischer (3) lösbar befestigt zu werden;
- eine Befestigungsvorrichtung (61), die konfiguriert ist, um die multifunktionale Buchse (5) an dem Gehäuse (10) außerhalb des Gehäuses (10) entfernbar zu befestigen.

2. Die Zelle nach Anspruch 1, wobei die Befestigungsvorrichtung (61) Gleiteingriffsmittel (6) aufweist, die dazu ausgelegt sind, die multifunktionale Buchse (5) an dem Gehäuse (10) mittels zumindest einer Gleitbewegung zwischen der multifunktionalen Buchse (5) und dem Gehäuse (10) entlang einer vordefinierten Gleitrichtung (S) zwischen einer Einsetzposition und einer Arretierposition zu befestigen.

3. Die Zelle nach Anspruch 2, wobei die Gleiteingriffsmittel (6) einen Verbindungsabschnitt (66), der durch eine Gleitfläche (63) definiert ist, eine gegenüberliegende Haltefläche (64), einen Gleitschlitz (65), der durch den Verbindungsabschnitt (66) zwischen der Gleitfläche (63) und der Haltefläche (64) hindurchgeht und sich entlang der Gleitrichtung erstreckt, aufweisen.

4. Die Zelle nach zumindest einem vorhergehenden Anspruch, wobei die Befestigungsvorrichtung (61) Referenzmittel (68) aufweist, um die Buchse (5) entlang der Gleitrichtung (S) zu führen und weitere Bewegungen der Buchse (5) zu verhindern, wenn sie in der Arretierposition ist.

5. Die Zelle nach zumindest einem vorhergehenden Anspruch, wobei der erste Fluidverbindungsabschnitt (52) einen ersten Flansch (52') aufweist, der eine erste Flanschendfläche (56) definiert, wobei die erste Flanschendfläche (56) eine zumindest teilweise flache Fläche ist.

6. Die Zelle nach Anspruch 5, wobei die erste Flanschendfläche (56) im Wesentlichen parallel zur Gleitfläche (63) ist.

7. Die Zelle nach Anspruch 5, wobei die erste Flanschendfläche (56) in Bezug auf die Gleitfläche (63) geneigt ist.

8. Die Zelle nach zumindest einem vorhergehenden Anspruch, wobei der erste Fluidverbindungsabschnitt (52) einen Ventilsitz (71) aufweist, um darin ein Rückschlagventil (80) aufzunehmen.

9. Die Zellen nach zumindest einem vorhergehenden Anspruch, wobei der zweite Fluidverbindungsabschnitt (54) einen zweiten Flansch (54') aufweist, wobei der zweite Flansch (54') einen Zweiter-Flansch-Innenquerschnitt (54') aufweist, der durch zwei zueinander gedrehte Rechtecke (59', 59") gebildet ist.

10. Die Zelle nach zumindest einem vorhergehenden Anspruch, wobei der rohrförmige Abschnitt (51) einen Rohrförmiger-Abschnitt-Innenquerschnitt (51') aufweist, der sich von einer ersten geometrischen Form an dem ersten Fluidverbindungsabschnitt (52) zu einer zweiten geometrischen Form an dem zweiten Fluidverbindungsabschnitt (54), die sich von der ersten geometrischen Form unterscheidet, allmählich verändert.

11. Die Zelle (1) nach zumindest einem vorhergehenden Anspruch, wobei die Tür (20) von dem Gehäuse (10) entlang einer vordefinierten Entfernungsrichtung (R) entfernt werden kann, und wobei die erste Flanschendfläche (56) im Gebrauch im Wesentlichen parallel zur vordefinierten Türentfernungsrichtung (R) ist.

12. Die Zellen nach zumindest einem vorhergehenden Anspruch, wobei die Tür (20) in dem Gehäuse (10) entlang einer vordefinierten Entfernungsrichtung (R) entfernt werden kann, und wobei die vordefinierte Gleitrichtung (S) der Buchse im Gebrauch im Wesentlichen parallel zur vordefinierten Entfernungsrichtung (R) ist.

13. Die Zelle (1) nach zumindest einem der vorhergehenden Ansprüche, wobei die Befestigungsvorrichtung (61) konfiguriert ist, um die multifunktionale Buchse (5) direkt an dem Gehäuse (10) zu befestigen.

14. Die Zelle (1) nach zumindest einem der vorhergehenden Ansprüche, wobei die Befestigungsvorrichtung (61) derart konfiguriert ist, dass die multifunktionale Buchse (5) mittels der Befestigungsvorrichtung (61) von dem Gehäuse (10) getragen ist oder von diesem hängt.

## Revendications

1. Cellule d'échangeur thermique prémix (1) comprenant :
- un caisson (10) adapté pour contenir un échangeur thermique liquide/gaz (14) et un espace de combustion (15) adjacent à l'échangeur (14) ;
- une porte (20) configurée pour être fixée de manière amovible au caisson (10) pour fermer le caisson, en utilisation, et adaptée pour être retirée du caisson (10) pour permettre l'accès à l'intérieur du caisson (10) pour des opérations de maintenance ;
- ladite porte (20) comprenant un conduit d'alimentation de mélange (21) ayant une première extrémité de conduit (21') connectée à une ouverture traversante de porte (23) de la porte (20) et se terminant à l'intérieur du caisson (10) au niveau de l'espace de combustion (15), ledit conduit d'alimentation de mélange (21) ayant une deuxième extrémité de conduit libre (21") adaptée pour recevoir un mélange gaz combustible/air de combustion entrant d'un prémélangeur (3) ;
- une douille multifonctionnelle (5)
- dans laquelle ladite douille multifonctionnelle (5) comprend :
- une portion tubulaire (51) ;
- une première portion de connexion fluidique (52) à une première extrémité de portion tubulaire (53) de la portion tubulaire (51), configurée pour être fixée de manière amovible à la deuxième extrémité de conduit (21") ;
- une deuxième portion de connexion fluidique (54) à une deuxième extrémité de portion tubulaire (55) de la portion tubulaire (51), opposée à la première extrémité (53), adaptée pour être fixée de manière amovible au prémélangeur (3) ;
- un dispositif de fixation (61) configuré pour la fixation amovible de la douille multifonctionnelle (5) au caisson (10), à l'extérieur du boîtier (10).

2. Cellule selon la revendication 1, dans laquelle le dispositif de fixation (61) comprend des moyens de mise en prise coulissants (6) adaptés pour fixer la douille multifonctionnelle (5) au caisson (10) par au moins un mouvement de coulissement entre la douille multifonctionnelle (5) et le caisson (10) le long d'une direction de coulissement prédéfinie (S) entre une position d'insertion et une position de verrouillage.

3. Cellule selon la revendication 2, dans laquelle les moyens de mise en prise coulissants (6) comprennent une portion de connexion (66) définie par une surface coulissante (63), une surface de retenue opposée (64), une fente coulissante (65) passant à travers la portion de connexion (66) entre la surface coulissante (63) et la surface de retenue (64) et s'étendant le long de la direction de coulissement (S).

4. Cellule selon au moins une revendication précédente, dans laquelle le dispositif de fixation (61) comprend des moyens de référence (68) pour guider la douille (5) le long de la direction de coulissement (S) et empêcher d'autres mouvements de la douille (5) lorsqu'elle est dans la position de verrouillage.

5. Cellule selon au moins une revendication précédente, dans laquelle la première portion de connexion fluidique (52) comprend une première bride (52') définissant une première surface d'extrémité de bride (56), ladite première surface d'extrémité de bride (56) étant une surface au moins partiellement plate.

6. Cellule selon la revendication 5, dans laquelle la première surface d'extrémité de bride (56) est sensiblement parallèle à la surface coulissante (63).

7. Cellule selon la revendication 5, dans laquelle la première surface d'extrémité de bride (56) est inclinée par rapport à la surface coulissante (63).

8. Cellule selon au moins une revendication précédente, dans laquelle la première portion de connexion fluidique (52) comprend un siège de soupape (71) pour la réception d'un clapet anti-retour (80) à l'intérieur de celui-ci.

9. Cellule selon au moins une revendication précédente, dans laquelle la deuxième portion de connexion fluidique (54) comprend une deuxième bride (54'), ladite deuxième bride (54') ayant une deuxième section transversale intérieure de bride (54') formée par deux rectangles (59', 59") mis en rotation l'un par rapport à l'autre.

10. Cellule selon au moins une revendication précédente, dans laquelle la portion tubulaire (51) a une section transversale intérieure de portion tubulaire (51') variant progressivement d'une première forme géométrique au niveau de la première portion de connexion fluidique (52) à une deuxième forme géométrique au niveau de la deuxième portion de connexion fluidique (54), qui est différente de la première forme géométrique.

11. Cellule (1) selon au moins une revendication précédente, dans laquelle la porte (20) peut être retirée du caisson (10) le long d'une direction de retrait prédéfinie (R), et dans laquelle la première surface d'extrémité de bride (56) est sensiblement parallèle, en utilisation, à la direction de retrait de porte prédéfinie (R).

12. Cellule (1) selon au moins une revendication précédente, dans laquelle la porte (20) peut être retirée du caisson (10) le long d'une direction de retrait prédéfinie (R) et dans laquelle la direction de coulissement prédéfinie (S) de la douille est sensiblement parallèle, en utilisation, à la direction de retrait prédéfinie (R).

13. Cellule (1) selon au moins une des revendications précédentes, dans laquelle le dispositif de fixation (61) est configuré pour fixer directement la douille multifonctionnelle (5) au caisson (10).

14. Cellule (1) selon au moins une des revendications précédentes, dans laquelle le dispositif de fixation (61) est configuré de sorte que la douille multifonctionnelle (5) est supportée par, ou suspendue à partir, du caisson au moyen dudit dispositif de fixation (61).
